# EUROPEAN PATENT SPECIFICATION

(11) **EP 1 918 161 B1**
(45) Date of publication and mention of the grant of the patent: **31.12.2008**
(21) Application number: 06425754.6
(22) Date of filing: 06.11.2006
(51) Int. Cl.: B60R 16/023, B60K 37/06

(54) **Control system for vehicle electrical components**
Steuersystem für elektrische Geräte eines Kraftfahrzeuges
Système de commande pour des dispositifs électriques d'un vehicule

(43) Date of publication of application: 07.05.2008
(73) Proprietor: C.R.F. Società Consortile per Azioni, 10043 Orbassano (Torino) (IT)
(72) Inventor: Savio, Walter, c/o C.R.F. Società per Azioni, 10043 Orbassano (IT)
(74) Representative: Cerbaro, Elena

(56) References cited:
- EP-A- 1 063 131
- EP-A- 1 398 679
- EP-A- 1 544 024
- EP-A2- 0 816 176
- WO-A-01/12459
- WO-A-20/05025919
- DE-A1- 10 341 947
- US-A- 5 811 891

## Description

The present invention concerns a control system for the electrical components of a vehicle, such as a motor vehicle, railway rolling stock, naval craft or an aircraft.

As is known, modern motor vehicles are equipped with a plurality of electrical components (for example, headlamps, window winders, electric actuators in general, electric motors in general, electronic devices such as car radio, satellite navigator, etc.) which are connected via electrical wiring to control devices that can be operated by the driver.

As a rule, these control devices are positioned at the front part of the vehicle's passenger compartment in a fixed position, such that they can be easily operated by the driver or at most by the front passenger.

It is well known that the passengers of motor vehicles who sit in the back seats do not have access to any electrical component control device, except for the rear electric window winders, usually positioned on the rear doors, and that the operation of nearly all the control devices for electrical components is almost exclusively confined to the driver of the motor vehicle.

Hence, given the continuous increase in the number of electrical components installed onboard modern vehicles, and the consequent increase in the control devices necessary for their operation, there is a need felt for technical solutions that allow greater flexibility in operating the control devices of electrical components.

In addition to the lack of flexibility in operating the said control devices, the known types of control system for the electrical components of vehicles exhibit considerable drawbacks with regards to the connection between the said control devices and the vehicle's electrical components.

In fact, the electrical wiring that connects the control devices to the components often involves the use of a large number of electrical cables running inside the vehicle itself, reaching considerable lengths as a whole (the overall length of cables in top-of-the-range vehicles can reach a few kilometres). These cables are bulky, heavy and have a non-marginal cost if vehicle installation is also considered.

The use of electrical cables also creates further problems such as, for example:
- difficulty in reaching the point of connection (the passage of a cable can be critical in many parts of the vehicle),
- electrical-mechanical stability (cables are subject to mechanical stress - vibration for example - which can compromise connection continuity), and
- the utilization of special connectors, which entails an increase in costs and complexity of the network and the system in general.

In order to reduce the complexity of these wiring harnesses, some manufacturers have proposed the utilization of serial local networks (CAN or LAN networks for example) for the transfer of commands from the driver to the electrical components.

Unfortunately, the reduction in interconnections achieved through the use of these local networks has been substantially limited, also due to need of implementing new onboard functions.

The object of the present invention is that of realizing a control system for a vehicle's electrical components, which allows the ways of using the control devices for the electrical components to be personalized, which reduces the number of electrical cables that connect the control devices to the electrical components and which improves the level of flexibility in the usage of these devices.

WO 01/12459 discloses a configurable instrument panel design, that integrates component designs so that an instrument panel (10) can be configured for a specific vehicle content as late in the vehicle assembly process as possible. An electrical system and modular instrument cluster (12) are provided that utilize the same flat flexible cable (16) for every vehicle independent of vehicle content. Instrument cluster modules (20, 22, 24, 26) are provided with universal connector arrangement (30), where the type and function of a particular module determine which connectors are live. A plurality of different multiplexing links are built-in to the electrical system and wiring arrangement allowing the system to be universal across all possible instrument cluster configurations. This allows the system to accommodate lower option vehicles at a lower cost than conventional technology. Instrument cluster features can be configured at the time of assembly, all without customizing the electrical system and wiring arrangement.

The present invention relates to a control system for an electrical component of a vehicle, in particular a motor vehicle, as defined in claim 1.

For a better understanding of the present invention, a preferred embodiment will now be described, purely by way of a non-limitative example and with reference to the attached drawings, in which:
- Figure 1 shows a control system for a vehicle's electrical components in accordance with the invention,
- Figure 2 shows a control device for a vehicle's electrical components, forming part of the control system in accordance with the invention, seen from the side,
- Figure 3 shows the interfaces of the control device for a vehicle's electrical components, arranged on the bottom of the control device, and
- Figures 4 and 5 shows a panel for the housing and control of the electrical component control devices.

For descriptive convenience and without suffering any loss in generality, the present invention will now be described with reference to a motor vehicle.

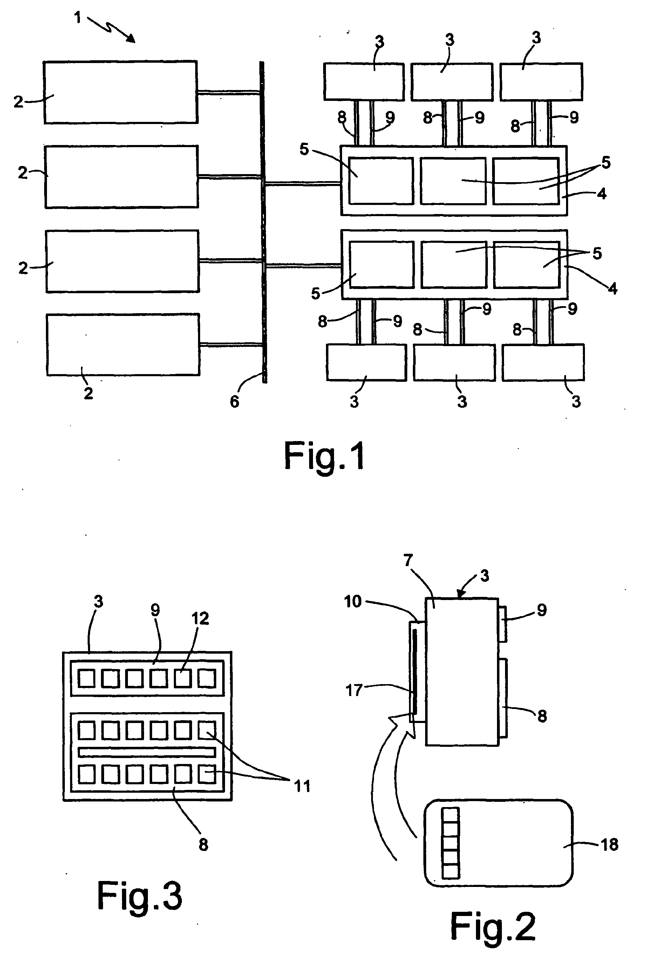

Figure 1 shows a control system, generally designated by reference numeral 1, for the electrical components of a vehicle (not shown in the Figure), including:
- a plurality of electrical components 2, for example, window winders, electric actuators in general, electric motors in general, electronic devices such as car radio, satellite navigator, etc.,
- a plurality of control devices 3 for the electrical components 2,
- a plurality of control panels 4 for the control devices 3 (two control panels 4 in the example in Figure 1), equipped with a plurality of housing seats 5 for the control devices 3 (three housing seats 5 for each control panel 4 in the example in Figure 1), and
- a communications system 6 inserted between the electrical components 2 and the control panels 4, such as a data bus for example.

In particular, the invention's control system for a vehicle's electrical components allows each electrical component 2, for example, the front right window winder or the fog lamps, to be operated via a specially provided control device 3 that can be housed in any housing seat 5 of any one of the control panels 4 according to the needs of the vehicle's occupants.

Thus, to that end, each control device 3 is configured such that it can be removed from the housing seat 5 of the control panel 4 in which it is housed and can be placed in any other housing seat 5 of any other control panel 4 to control the electrical component 2 that is associated with it from any of the housing seats 5 of the control panel 4.

In particular, the electrical components 2 generically include a device directly operated by an electrical command (for example, a lamp that lights after an electrical signal is received) or an electrical/mechanical/hydraulic/pneumatic device that can be operated via an electrical command (for example, a headlight washer device that is operated by an electrical command) and are equipped with a transceiver module (not shown in the figure) to transmit/receive data via the communications system 6.

In particular, according to a first preferred embodiment, shown in Figure 2, the control device 3 of component 2 includes:
- a container 7 of small dimensions and a generally parallelepiped shape,
- a configuration interface 8 and a control interface 9 of the control device 3, both housed on the bottom of the container 7, and
- a man-machine interface 10, for example, a button, a display, a voice-operated device, etc., for operation of the control device 3 housed, for example, on the upper surface of the container 7 and connected to the control interface 9 of the control device 3.

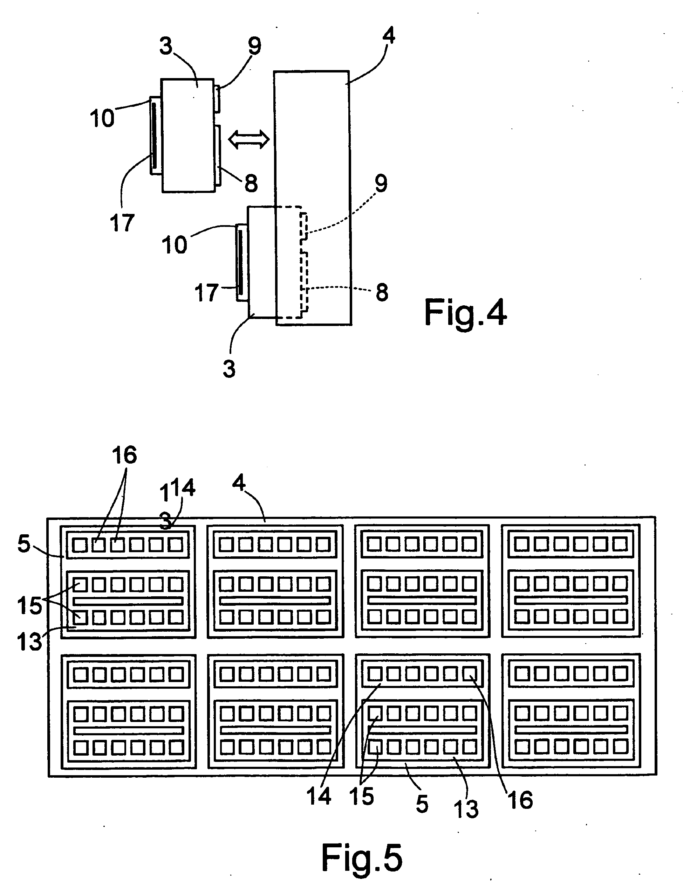

In particular, as shown in Figure 4, the control device 3 is provided with a simple plug-in system (not shown in the figure) via which it is possible to firmly house the control device 3 inside a housing seat 5 of the control panels 4 and remove the control device 3 from the housing seat 5 of control panel 4 in which it is inserted.

In the aforesaid embodiment, the functionality of the control device 3 is defined in a design and manufacturing phase of the control device 3, opportunely configuring the configuration interface 8 and the control interface 9 of the control device 3. This configuration cannot be modified in any way by the user, who can use the control device 3 exclusively for operating component 2, for which the control device 3 has been configured.

In particular, the information related to the configuration of the control device 3 such as, for example:
- identification code of the control device 3, for example, front right window winder or fog lamps switch or windscreen wiper switch, and
- identification code of the electrical component 2 that must be controlled by the control device 3, for example, front right window, fog lamps or windscreen wiper,
are supplied to the control device 3 via the configuration interface 8 that, as shown in Figure 3, can be made, for example, by means of a plurality of pairs of electrical contacts 11 (six pairs of electrical contacts 11 in the example in Figure 3) housed on the bottom of the container 7 of the control device 3, in which each pair defines a specific function of the control device 3.

By configuring the pairs of electrical contacts 11 in an opportune manner, it is possible to configure each control device 3 in an unambiguous manner based on its function.

For example, always with reference to Figure 3, configuring the first and the second pair of electrical contacts 11 starting from the right, the control device 3 could be configured as the front right window winder by associating, for example, the identification code of the control device 3 with the first pair of electrical contacts 11, namely window winders, and the identification code of the controlled component, for example, the front right window, to the second pair of electrical contacts 11. Or, similarly, configuring the first and the third pair of electrical contacts 11 starting from the right, the control device 3 could be configured as the switch for the fog lamps by associating, for example, the identification code of the control device 3, namely the fog lamps switch, with the first pair of electrical contacts and the identification code of the fog lamps with the third pair of electrical contacts 11, etc.

The electrical contacts can be made, for example, in a manner such that each electrical contact has a certain resistance value to which a certain item of information is associated, or in a manner such that in each pair of electrical contacts, one of the two contacts represents a closed electrical connection and the other represents an open electrical connection.

Similarly, the information regarding the state of the control device 3, switch on or off for example, is defined in a design and manufacturing phase of the control device 3 as a function of the state of the man-machine interface 10, by configuring the control interface 9 of control device 3 in an opportune manner.

Always with reference to Figure 3, the control interface 9 of the control device 3 can be made in a similar manner to the configuration interface 8, for example, via a set of electrical contacts 12 that, when the control device 3 is inserted in a housing seat 5 of the control panel 4, closes or opens an electrical circuit that connect the control device 3 with the control panel 4, depending on whether the control device 3 is activated or deactivated via the man-machine interface 10.

In order to clearly identify each control device 3 of each component 2, the function for which each control device 3 in the aforesaid embodiment has been configured could be graphically represented on the upper surface of the container 7 of the control device 3.

In particular, the control panels 4 of the control devices 3 can be distributed in different points inside the passenger compartment (not shown in the figure) of the vehicle and be mounted, for example, on the front righthand door and/or on the rear side panels/doors, so as to allow all of the vehicle's occupants to operate the electrical components 2.

As shown in Figure 5, each control panel 4 is equipped with a plurality of housing seats 5 (eight housing seats 5 in the example in Figure 3) for housing the control devices 3 and a control and transceiver unit (not shown in the figure) for the control of the control device 3 that has been housed in a housing seat 5 of the control panel 4 and the transmission of commands coming from the control device 3 to the component associated with the control device 3 through the communications system 6.

In particular, each housing seat 5 of the control panel 4 includes:
- an interface 13 constructed in a similar manner to the configuration interface 8 of the control device 3, for example, via a plurality of pairs of electrical contacts 15 (six pairs of electrical contacts 15 in the example in Figure 3), and
- an interface 14 constructed in a similar manner to the control interface 9 of the control device 3, for example, via a set of electrical contacts 16.

The interfaces 13 and 14 are connected to the control and transceiver unit of the control panel 4, which is configured for:
- reading information regarding the configuration of the control device 3 when the control device 3 is housed in the housing seat 5 and the configuration interface 8 of the control device 3 is connected to interface 13 of the housing seat 5;
- reading information regarding the state of the control device 3 supplied by the control interface 9 of the control device 3 when the control device 3 is housed in the housing seat 5 and the control interface 9 of the control device 3 is connected to interface 14 of the housing seat 5; and
- transmitting command signals arriving from the control device 3 to the component 2 via the communications system 6, when the control device 3 is operated by a user via the man-machine interface 10.

When the control device 3 is inserted in a housing seat 5 of a control panel 4, the electrical contacts 11 and the electrical contacts 12 of the configuration interface 8 of the control device 3 make contact with the electrical contacts 15 of interface 13 and the electrical contacts 16 of interface 14 of the housing seat 5 respectively, creating a connection between the control device 3 and the control and transceiver unit of the control panel 4. The control unit of the control panel 4 thus reads the information regarding the configuration of the control device 3 stored in the configuration interface 8, identifying the control device 3 and, simultaneously, queries the control interface 9 of the control device 3 to detect the operating state of the control device 3.

When the control device 3 is activated or deactivated via the man-machine interface 10, the control unit of the control panel 4 transmits a command signal to the component associated with the control device 3 through the communications system 6, activating or deactivating the component 2.

According to a further embodiment of the control device 3 (also shown in Figure 2), in order to give the user the possibility of configuring the control device 3 for the components 2 according to his/her own requirements, the control device 3 could include a slot 17, shown in Figure 2 with a black line, accessible from the outside of the device 3 itself. In particular, the term "slot" is intended as a connector equipped with electrical contacts paired with the electrical contacts 11 of the configuration interface 8 of the control device 3, into which an electronic card 18 equipped with corresponding electrical contacts can be inserted, for example, a SIM card or a smart card, in which information regarding a specific configuration of the control device 3 has been stored.

In particular, again with reference to Figure 2, an icon (not shown in Figure 2) can be depicted on one side of the electronic card 18 that indicates the function of the control device 3, for example, front window winders, while the electrical contacts (these also not shown in Figure 2) are positioned on other side of the electronic card 18 and subsequently connect to the electrical contacts of the slot 17 when the electronic card 18 is inserted in the slot 17.

In this embodiment, the control device 3 includes a control and transceiver unit (not shown in Figure 2) housed inside the container 7, configured to:
- store information regarding the configuration of the control device 3 such as, for example, the identification code of the control device 3 and the identification code of the electrical component 2 that must be controlled by the control device 3,
- detect the operating state of the control device 3, for example, activated/deactivated etc., based on the operation of the man-machine interface 10,
- receive information originating from the electronic card 18 when inserted in the slot 17,
- transmit to the electronic control unit of the control panel 4, every time the control device 3 is housed in a housing seat 5 of a control panel 4:
   - information regarding the configuration of the control device 3 stored or received from the electronic card 12 through configuration interface 8 of the control device 3, and
   - information regarding the operating state of the control device 3, through the control interface 9 of the control device 3.

When the control device 3 is inserted in a housing seat 5 of a control panel 4, and electrical contacts 11 and electrical contacts 12 of the configuration interface 8 of the control device 3 make contact with electrical contacts 15 of interface 13 and electrical contacts 16 of interface 14 of the housing seat 5 respectively, creating a connection between the control unit of the control device 3 and the control and transceiver unit of the control panel 4, the electronic control unit of the control panel 4 queries the electronic control unit of the control device 3 through the configuration interface 8 and compares the data received regarding the configuration of the control device 3 and the data contained in an internally stored table that contains the identification codes of the control devices 3 associated with the respective components 2 in order to identify the inserted control device 3 and its functionality.

At the same time, the electronic control unit of the control panel 4 queries the control interface 9 of the control device 3 to detect the operating state of the control device 3.

In this case as well, when the control device 3 is activated or deactivated through the man-machine interface 10, the control unit of the control panel 4 transmits a command signal to the component associated with the control device 3 through the communications system 6, activating or deactivating the component 2.

In the case in which the component 2 is equipped with an electronic control unit and the control device 3 is equipped with a display unit for the operating state of the component 2 that is associated with it, the control unit of the component transmits, at regular time intervals, signals containing information concerning the state of the component 2 to the electronic control unit of the control device, so that the state of the component 2 can be displayed on the display unit of the control device 3 and the user is always aware of the operating state of the component 2.

On the basis of that described above, it is clear how the control system embodied by present invention significantly improves flexibility in operating the vehicle's electrical components, allows the configuration of the control system to be personalized and the implementation of new functionality onboard the vehicle.

It is obvious, in conclusion, that changes and variants can be made to the control system described and illustrated herein without however departing from the protective scope of the present invention, as defined in the attached claims.

Finally, the control system in accordance with the invention could be utilized not just for motor vehicles, but on any type of vehicle, for example, ships, trains, planes, etc.

## Claims

1. A control system (1) for an electrical component (2) of a vehicle, the control system (1) comprising:
• a control device (3) for said electrical component (2) ;
• a control panel (4) for said control device (3), said control panel (4) including a plurality of housing seats (5) for said control device (3); and
• a communications system provided between said control panel (4) and said electrical component (2);
wherein said control device (3) is configured to be removable from the housing seat (5) in which it is housed, to be relocatable in any one of said housing seats (5) of said control panel (4), and to be identified by said control panel (4) so as to control said electrical component (2) from any one of said housing seats (5) of said control panel (4);
• first fixing means configured to removably fix said control device (3) in said housing seat (5);
• human-machine interface means (10) configured to operate said control device (3);
• first electrical connection means (8, 11) configured to electrically connect said control device (3) to said control panel (4) and to transmit signals containing information regarding a configuration of said control device (3) to said control panel (4);
• second electrical connection means (9, 12) configured to electrically connect said control device (3) to said control panel (4) and to transmit command signals for said electrical component (2) and signals indicative of an operating state of said control device (3) to said control panel (4);
• processing and transmitting/receiving means configured to:
- receive and process said command signals for said electrical component (2) and signals from said electrical component (2); and
- transmit said command signals to said electrical component (2) and said signals from said electrical component (2) to said control device (3); and
**characterized by**:
• a slot (17) configured to be accessible from the outside of said control device (3) and to accept a memory card provided with electrical contacts and storing information regarding a specific configuration of said control device (3).

2. A control system according to claim 1, wherein said electrical component (2) further includes transmitting/receiving means configured to receive said command signals from said control device (3) and to transmit signals through said communications system (6).

3. A control system according to claim 1 or 2, wherein said information regarding a configuration of said control device (3) includes at least:
• an identification code of said control device (3); and
• an identification code of said electrical component (2) controlled by said control device (3).

4. A control system according to any one of the preceding claims, wherein said control panel (4) includes processing and transmitting/receiving means connected to each one of said housing seats (5) of said control device (3) and to said communications system (6), and configured to:
- receive and process said command signals from said control device (3) and said signals from said electrical component (2); and
- transmit said command signals to said component (2) and said signals from said electrical component (2) to said control device (3) through said communications system (6).

5. A control system according to any one of the preceding claims, wherein each housing seat (5) includes:
• second fixing means configured to couple with said first fixing means to removably fix said control device (3) in said housing seat (5); and
• third electrical connection means (13, 15) configured to contact said first electrical connection means (11, 12) of said control device (3) and electrically connect said control device (3) to an electrical power supply source.

6. A control system according to any one of the preceding claims, wherein said communications system includes a data bus.

7. A control system according to any one of the preceding claims, wherein said vehicle is a motor vehicle.

8. A control system according to any one of the preceding claims, wherein said vehicle is railway vehicle.

9. A control system according to any one of the preceding claims, wherein said vehicle is a naval craft.

10. A control system according to any one of the preceding claims, wherein said vehicle is an aircraft.

## Patentansprüche

1. Steuerungssystem (1) für eine elektrische Komponente (2) eines Fahrzeugs, wobei das Steuerungssystem (1) folgendes aufweist:
- eine Steuereinrichtung (3) für die elektrische Komponente (2);
- ein Bedienfeld (4) für die Steuereinrichtung (3), wobei das Bedienfeld (4) eine Vielzahl von Gehäusesitze (5) für die Steuereinrichtung (3) aufweist; und
- ein Kommunikationssystem, das zwischen dem Bedienfeld (4) und der elektrischen Komponente (2) vorgegehen ist,
wobei die Steuereinrichtung (3) so konfiguriert ist, daß sie aus dem Gehäusesitz (5) herausnehmbar ist, in welchem sie untergebracht ist, daß sie in irgendeinem der Gehäusesitze (5) des Bedienfeldes (4) wieder einseilbar ist, und daß sie von dem Bedienfeld (4) identifizierbar ist, um die elektrische Komponente (2) von irgendeinem der Gehäusesitze (5) des Bedienfeldes (4) zu steuern;
- eine erste Befestigungseinrichtung, die dazu ausgelegt ist, die Steuereinrichtung (3) in dem Gehäusesitz (5) herausnehmbar zu befestigen;
- eine Mensch-Maschine-Schnittstelle (10), die zum Betreiben der Steuereinrichtung (3) konfiguriert ist;
- eine erste elektrische Verbindungseinrichtung (8, 11), die dazu ausgelegt ist, die elektrische Steuereinrichtung (3) mit dem Bedienfeld (4) elektrisch zu verbinden und Signale, welche Information hinsichtlich einer Konfiguration der Steuereinrichtung (3) enthalten, zu dem Bedienfeld (4) zu übertragen;
- eine zweite elektrische Verbindungseinrichtung (9, 12), die dazu ausgelegt ist, die Steuereinrichtung (3) mit dem Bedienfeld (4) elektrisch zu verbinden und Steuersignale für die elektrische Komponente (2) sowie Signale, die einen Betriebszustand der Steuereinrichtung (3) angeben, zu dem Bedienfeld (4) zu übertragen;
- eine Verarbeitungs- und Sende/Empfangseinrichtung, die dazu ausgelegt ist
Steuersignale für die elektrische Komponente (2) sowie Signale von der elektrischen Komponente (2) zu empfangen und zu verarbeiten; und
die Steuersignale zu der elektrischen Komponente (2) und die Signale von der elektrischen Komponente (2) zu der Steuereinrichtung (3) zu übertragen,
**gekennzeichnet durch** einen Schlitz (17), der so ausgelegt ist, daß er von der Außenseite der Steuereinrichtung (3) zugänglich ist und eine Speicherkarte aufnehmen kann, die mit elektrischen Kontakten versehen ist und die Information hinsichtlich einer spezifischen Konfiguration der Steuereinrichtung (3) speichert.

2. Steuerungssystem nach Anspruch 1,
wobei die elektrische Komponente (2) ferner eine Sende/Empfangseinrichtung aufweist, die dazu ausgelegt ist, die Befehlssignale von der Steuereinrichtung (3) zu empfangen und Signale durch das Kommunikationssystem (6) zu übertragen.

3. Steuerungssystem nach Anspruch 1 oder 2,
wobei die Information hinsichtlich einer Konfiguration der Steuereinrichtung (3) zumindest folgendes enthält:
- einen Identifizierungscode der Steuereinrichtung (3); und
- einen Identifizierungscode der elektrischen Komponente (2), die von der Steuereinrichtung (3) gesteuert wird.

4. Steuerungssystem nach einem der vorhergehenden Ansprüche,
wobei das Bedienfeld (4) eine Verarbeitungs- und Sende/Empfangseinrichtung aufweist, die mit jedem von den Gehäusesitze (5) der Steuereinrichtung (3) und mit dem Kommunikationssystem (6) verbunden ist und die dazu ausgelegt ist,
- die Befehlssignale von der Steuereinrichtung (3) und die Signale von der elektrischen Komponente (2) zu empfangen und zu verarbeiten; und
- die Befehlssignale zu der elektrischen Komponente (2) und die Signale von der elektrischen Komponente (2) zu der Steuereinrichtung (3) durch das Kommunikationssystem (6) zu übertragen.

5. Steuerungssystem nach einem der vorergehenden Ansprüche,
wobei jeder Gehäusesitze (5) folgendes aufweist:
- eine zweite Befestigungseinrichtung, die dazu ausgelegt ist, eine Kopplung mit der ersten Befestigungseinrichtung herzustellen, um die Steuereinrichtung (3) in dem Gehäusesitz (5) lösbar zu befestigen; und
- eine dritte elektrische Verbindungseinrichtung (13, 15), die dazu ausgelegt ist, einen Kontakt mit der ersten elektrischen Verbindungseinrichtung (11, 12) der Steuereinrichtung (3) herzustellen und die Steuereinrichtung (3) mit einer elektrischen Stromversorgungsquelle elektrisch zu verbinden.

6. Steuerungssystem nach einem der vorhergehenden Ansprüche,
wobei das Kommunikationssystem einen Datenbus aufweist.

7. Steuerungssystem nach einem der vorhergehenden Ansprüche,
wobei das Fahrzeug ein Kraftfahrzeug ist.

8. Steuerungssystem nach einem der vorhergehenden Ansprüche,
wobei das Fahrzeug ein Schienenfahrzeug ist.

9. Steuerungssystem nach einem der vorhergehenden Ansprüche,
wobei das Fahrzeug ein Wasserfahrzeug ist.

10. Steuerungssystem nach einem der vorhergehenden Ansprüche,
wobei das Fahrzeug ein Flugzeug ist.

## Revendications

1. Système de commande (1) pour un composant électrique (2) d'un véhicule, le système de commande (1) comprenant :
■ un dispositif de commande (3) pour ledit composant électrique (2) ;
■ un panneau de commande (4) pour ledit dispositif de commande (3), ledit panneau de commande (4) comprenant une pluralité d'assises de logement (5) pour ledit dispositif de commande (3) ; et
■ un système de communication prévu entre ledit panneau de commande (4) et ledit composant électrique (2) ;
■ dans lequel ledit dispositif de commande (3) est configuré pour pouvoir être retiré de l'assise de logement (5) dans laquelle il est logé, pour être repositionné dans une autre quelconque desdites assises de logement (5) dudit panneau de commande (4), et pour être identifié par ledit panneau de commande (4) de sorte à commander ledit composant électrique (2) à partir de n'importe laquelle desdites assises de logement (5) dudit panneau de commande (4) ;
■ des premiers moyens de fixation configurés pour fixer de façon amovible ledit dispositif de commande (3) dans ladite assise de logement (5) ;
■ des moyens d'interface homme-machine (10) configurés pour actionner ledit dispositif de commande (3) ;
■ des premiers moyens de connexion électrique (8, 11) configurés pour connecter électriquement ledit dispositif de commande (3) audit panneau de commande (4) et pour transmettre les signaux contenant des informations concernant une configuration dudit dispositif de commande (3) audit panneau de commande (4) ;
■ des deuxièmes moyens de connexion électriques (9, 12) configurés pour connecter électriquement ledit dispositif de commande (3) audit panneau de commande (4) et pour transmettre des signaux de commande pour ledit composant électrique (2) et des signaux indiquant un état opérationnel dudit dispositif de commande (3) audit panneau de commande (4) ;
■ des moyens de traitement et démission/réception configurés pour :
■ recevoir et traiter lesdits signaux de commande pour ledit composant électrique (2) et les signaux provenant dudit composant électrique (2) ; et
■ transmettre lesdits signaux de commande audit composant électrique (2) et lesdits signaux dudit composant électrique (2) audit dispositif de commande (3) ; et
**caractérisé par**
■ une fente (17) configurée pour être accessible depuis l'extérieur dudit dispositif de commande (3) et pour accepter une carte mémoire dotée de contacts électriques et stockant des informations concernant une configuration spécifique dudit dispositif de commande (3).

2. Système de commande selon la revendication 1, dans lequel ledit composant électrique (2) comprend en outre des moyens d'émission/réception configurés pour recevoir lesdits signaux de commande dudit dispositif de commande (3) et pour transmettre les signaux par le biais dudit système de communication (6).

3. Système de commande selon la revendication 1 ou 2, dans lequel lesdites informations concernant une configuration dudit dispositif de commande (3) comprennent au moines :
■ un code d'identification dudit dispositif de commande (3) ; et
■ un code d'identification dudit composant électrique (2) commandé par ledit dispositif de commande (3).

4. Système de commande selon l'une quelconque des revendications précédentes, dans lequel ledit panneau de commande (4) comprend des moyens de traitement et d'émission/réception connectés à chacune desdites assises de logement (5) dudit dispositif de commande (3) et audit système de communication (6), et configurés pour :
■ recevoir et traiter lesdits signaux de commande provenant dudit dispositif de commande (3) et lesdits signaux provenant dudit composant électrique (2) ; et
■ transmettre lesdits signaux de commande audit composant (2) et lesdits signaux provenant dudit composant électrique (2) audit dispositif de commande (3) par le biais desdits moyens de communication (6).

5. Système de commande selon l'une quelconque des revendications précédentes, dans lequel chaque assise de logement (5) comprend :
■ des seconds moyens de fixation configurés pour se coupler avec lesdits premiers moyens de fixation pour fixer de façon amovible ledit dispositif de commande (3) dans ladite assise de logement (5) ; et
■ des troisièmes moyens de connexion électrique (13, 15) configurés pour entrer en contact avec lesdits premiers moyens de connexion électriques (11, 12) dudit dispositif de commande (3) et connecter électriquement ledit dispositif de commande (3) à une source d'alimentation électrique.

6. Système de commande selon l'une quelconque des revendications précédentes, dans lequel ledit système de communication comprend un bus de données.

7. Système de commande selon l'une quelconque des revendications précédentes, dans lequel ledit véhicule est un véhicule à moteur.

8. Système de commande selon l'une quelconque des revendications précédentes, dans lequel ledit véhicule est un véhicule ferroviaire.

9. Système de commande selon l'une quelconque des revendications précédentes, dans lequel ledit véhicule est un bateau.

10. Système de commande selon l'une quelconque des revendications précédentes, dans lequel ledit véhicule est un avion.
